# EUROPEAN PATENT SPECIFICATION

(11) **EP 2 527 754 B1**
(45) Date of publication and mention of the grant of the patent: **09.07.2014**
(21) Application number: 12166400.7
(22) Date of filing: 02.05.2012
(51) Int. Cl.: F24F 11/00, F25B 49/02, G05D 22/00, F24F 1/00

(54) **Control system and method for both energy saving and confort control in an air conditioning system**
Steuersystem und Verfahren zum Energiesparen und Komfortsteuerung in einem Klimaanlagensystem
Système de commande et procédé de commande de confort et d'économie d'énergie dans un système de conditionnement d'air

(30) Priority: 23.05.2011 US 201161489080 P; 21.12.2011 US 201113333658
(43) Date of publication of application: 28.11.2012
(60) Divisional application: 14164788.3
(73) Proprietor: Lennox Industries Inc., Richardson, TX 75080 (US)
(72) Inventor: Qu, Yi, Coppell, TX Texas 75019 (US); Hrejsa, Peter, Frisco, TX Texas 75034 (US)
(74) Representative: Williams, David John

(56) References cited:
- WO-A1-2009/024090
- WO-A1-2009/061301
- US-A- 5 062 276
- US-A1- 2005 257 537
- US-A1- 2010 204 838

## Description

### CROSS-REFERENCE TO RELATED APPLICATION

This application claims the benefit of U.S. Provisional Application Serial No. 61/489,080, filed by Qu, et al., on May 23, 2011, entitled "Control Method for Both Energy Saving and Comfort Control in a System with Variable Speed Compressor and Variable Speed Indoor Blower," commonly assigned with this application.

### TECHNICAL FIELD

This application is directed, in general, to heating, ventilation and air conditioning (HVAC) systems and, more specifically, to a control system and method for achieving both energy saving and comfort in an air conditioning system.

### BACKGROUND

Conventional residential HVAC systems cycle their compressors on and off or operate their compressors at variable speed primarily to control the temperature of the room conditioned by the HVAC system. These systems control humidity passively as a result of controlling the temperature.

Some conventional HVAC systems are capable of performing active humidity control by operating their compressors at an elevated speed, perhaps their maximum speed, and operating their indoor blower at a speed below what is needed to control the temperature. Unfortunately, while the humidity may be thus controlled, the room is almost inevitably overcooled.

US 2010/204838 discloses an energy efficient air conditioning system utilizing variable capacity compressor and sensible heat loading ration. The system may incorporate a controller, a variable capacity compressor responsive to the controller, an evaporator in communication with an input of the compressor, and at least one cooling component for generating an airflow over the evaporator to generate a cooling airflow using the evaporator, wherein the cooling component being responsive to the controller. A first input enables a user to provide a user determined dry bulb temperature range for an enclosed environment, and a second input enables the user to provide a user determined moisture content range for the enclosed environment. The controller controls at least one of the compressor and the cooling component to vary a sensible heat ratio (SHR), in order to maintain a dry bulb temperature and the moisture content within the enclosed environment in accordance with the user defined ranges.

WO 2009/024090 is related to an integrated motor controller with direct networking capability. A network controller receives differential environmental information. A motor controller and environmental processor thereafter utilize the received information to determine desired speeds and settings for various components within an environmental system.

US 2005/257537 relates to a fan speed control system having a temperature and humidity sensing unit which detects environmental temperature and humidity and outputs a corresponding electrical signal. The electrical signal is received and processed by a micro-control unit, which sends the digital signal to the fan to control fan speed accordingly.

WO 2009/061301 relates to control of an indoor fan to improve dehumidification. Comfort and humidity levels in a conditioned space are controlled by cycling the speed of an evaporator fan motor by periodically switching between a first and second speed. If higher cooling capacities are desired, the time associated with operating the indoor fan at the second speed is increased and when lower humidity levels are desired the time associated with operating the indoor fan at the first speed is increased.

### SUMMARY

One aspect of the invention provides a control system for controlling both temperature and humidity in an air conditioning system having a variable-speed compressor and a variable-speed indoor blower. In one embodiment, the control system includes: (1) a temperature control loop in which a target speed of the compressor is determined based on sensed and setpoint temperatures and (2) a humidity control loop, located in the temperature control loop, in which a target speed of the indoor blower is determined based on sensed and setpoint humidities, the target speed of the compressor employable to control the compressor and the target speed of the indoor blower employable to control the indoor blower of the air conditioning system.

Another arrangement according to the invention provides a control method for controlling both temperature and humidity in an air conditioning system having a variable-speed compressor and a variable-speed indoor blower. In one embodiment, the method includes: (1) determining a target speed of the compressor based on sensed and setpoint temperatures, (2) determining a target speed of the indoor blower based on sensed and setpoint humidities, (3) employing the target speed of the compressor to control the compressor of the air conditioning system and (4) employing the target speed of the indoor blower to control the indoor blower of the air conditioning system.

Yet another aspect of the invention provides an HVAC system. In one embodiment, the HVAC system includes: (1) a variable-speed compressor, (2) a condenser coil coupled to the variable-speed compressor, (3) a variable-speed indoor blower, (4) an evaporator coil coupled to the condenser coil and the variable-speed indoor blower and (5) a control system for controlling both temperature and relative humidity, having: (5a) a temperature control loop in which a target speed of the compressor is determined based on sensed and setpoint temperatures and (5b) a relative humidity control loop, located in the temperature control loop, in which a target speed of the indoor blower is determined based on sensed and setpoint relative humidities, the target speed of the compressor employable to control the compressor and the target speed of the indoor blower employable to control the indoor blower of the HVAC system.

Preferred embodiments of the invention are defined in the claims.

### BRIEF DESCRIPTION

Reference is now made to the following descriptions taken in conjunction with the accompanying drawings, in which:
FIG. 1 is a block diagram of one embodiment of an HVAC system within which a control system or method constructed according to the principles of the invention can operate;
FIG. 2 is a graphical representation of sensible capacity of an example air conditioning system in terms of the sensible heat load of a room conditioned by the air conditioning system divided by the total heat load of that room (S/T), also known as the "room sensible heat factor" (RSHF);
FIG. 3 is a block diagram of one embodiment of a control system for controlling both temperature and humidity in an air conditioning system having a variable-speed compressor and a variable-speed indoor blower; and
FIG. 4 is a flow diagram of one embodiment of a control method for controlling both temperature and humidity in an air conditioning system having a variable-speed compressor and a variable-speed indoor blower.

### DETAILED DESCRIPTION

It is realized herein that air conditioning systems having a variable-speed compressor and a variable-speed indoor blower are capable of being operated in a far more sophisticated manner than heretofore thought possible. It is therefore realized herein that, rather than treating temperature control and humidity control as separate control functions, they can be unified into a single, joint temperature/humidity control function that increases the control domain of the air conditioning, allowing overcooling to be avoided and generally increasing overall air conditioning efficiency, sometimes dramatically. Accordingly, described herein are various embodiments of a control system and method for controlling both temperature and humidity in an air conditioning system having a variable-speed compressor and a variable-speed indoor blower. Certain of the embodiments are operable with a standalone air conditioning system. Other embodiments are operable with an HVAC system, including those based on a heat pump.

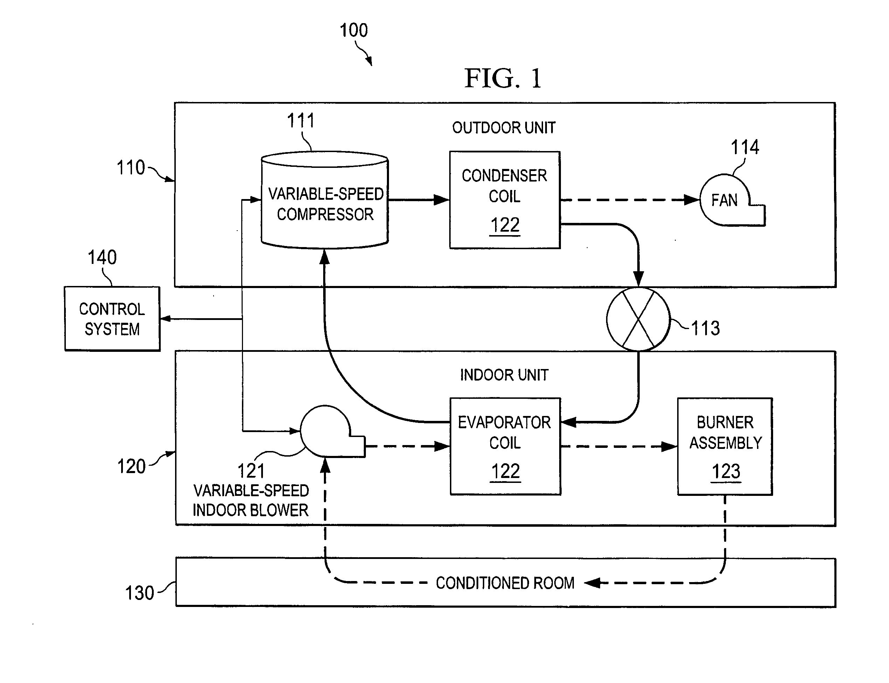

FIG. 1 is a block diagram of one embodiment of an HVAC system 100 within which a control system or method constructed according to the principles of the invention can operate. The HVAC system 100 includes an outdoor unit 110, which is typically located on or adjacent a building to be conditioned. The HVAC system 100 further includes an indoor unit 120, which is typically located at least partially in the building to be conditioned. The indoor unit 120 is in air communication with a conditioned room 130, typically by way of ductwork. The illustrated embodiment of the HVAC system 100 is a split system. In an alternative embodiment, the outdoor unit 110 and indoor unit 120 are contained in a single, rooftop unit (RTU).

The outdoor unit 110 includes a variable-speed compressor 111 and at least one condenser coil 112. The indoor unit 120 includes at least one evaporator coil 122. The variable-speed compressor 111, the at least one condenser coil 112, the evaporator coil 122 and an expansion valve 113 are coupled to one another in a refrigerant loop (represented by unreferenced unbroken lines joining the variable-speed compressor 111, the at least one condenser coil 112, the evaporator coil 122 and the expansion valve 113). Refrigerant (not shown) circulates through the refrigerant loop, where it is, in sequence, compressed by the variable-speed compressor 111, cooled by the at least one condenser coil 112, decompressed by the expansion valve 113, heated by the at least one evaporator coil 122 and returned to the variable-speed compressor to begin its circulation anew.

The indoor unit 120 further includes a variable-speed indoor blower 121 configured to cause air from the conditioned room 130 (represented by unreferenced broken lines) to impinge upon, and transfer some of its heat and humidity to, the at least one evaporator coil 122. In the illustrated embodiment, the indoor unit 120 further includes a burner assembly 123 configured to heat the air from the conditioned room 130. Alternative embodiments of the HVAC system 100 lack the burner assembly and therefore perform only a cooling, heat-pump heating or ventilating function.

The illustrated embodiment of the outdoor unit 110 further includes a fan 114 configured to cause outdoor air to impinge on, and transfer some heat from, the at least one condenser coil 112. An alternative embodiment of the outdoor unit 110 lacks the fan 114, relying instead on convective air currents to cool the at least one condenser coil 112.

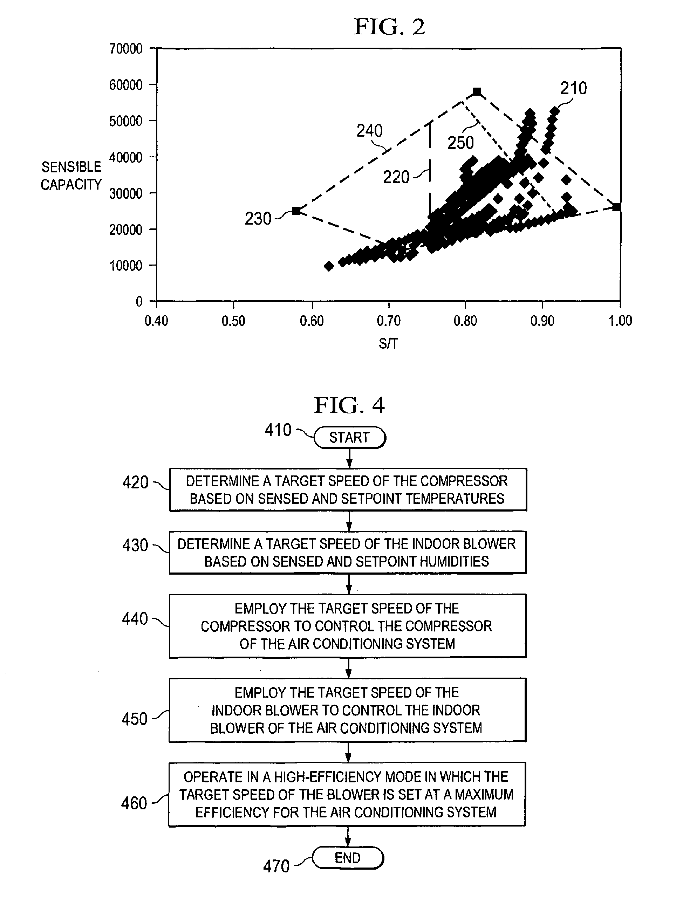

A control system 140 is configured to provide control signals to at least the variable-speed compressor 111 and the variable-speed indoor blower 121. Control signals for the variable-speed compressor 111 are configured to command the variable-speed compressor 111 to assume a target speed. In the illustrated embodiment, the target speed is expressed as a percentage of a maximum operating speed. In another embodiment, the target speed is expressed in terms of a number of compressor stages to be activated. Likewise, control signals for the variable-speed indoor blower 121 are configured to command the variable-speed indoor blower 121 to assume a target speed. In the illustrated embodiment, the target speed is expressed in terms of cubic feet per minute (CFM). In another embodiment, the target speed is expressed in terms of a rotational rate of the blower motor per minute (RPM). As stated above, it is realized herein that the control system 140 can control the variable-speed compressor 111 and the variable-speed indoor blower 121 cooperatively. FIG. 2 will now be presented for the purpose of showing how such cooperative control can be advantageous.

FIG. 2 is a graphical representation of sensible capacity of an example air conditioning system in terms of RSHF. The example of FIG. 2 involves a residence located in Houston, Texas, USA, a city known for its high heat and humidity. Various samples of sensible load and RSHF load were taken at an outdoor temperature of 85°F and indoor conditions of 76°F/50%RH. FIG. 2 shows these samples as 210. An air conditioning system employing a conventional temperature control system is capable of operating along a vertical line 220. An air conditioning system employing a conventional humidity control system is capable of operating at a point 230, causing the conditioned room to be overcooled to achieve a suitable humidity.

With the control system and method disclosed herein, the air conditioning system is capable of operating at any point or along any line lying within a dashed frame 240. The control system and method are configured to control temperature and humidity levels concurrently by varying compressor speed and indoor air flow rate so the air conditioning system can cover the area inside the dashed frame 240.

Particularly interesting is that the boundary 240 includes a line 250 indicating an optimal efficiency at which the air conditioning system can be operated. Accordingly, in one embodiment, the control system and method described herein are configured to cause the air conditioning system to operate at its optimal efficiency and remain able to maintain a temperature and humidity in the conditioned room that is at least close to a setpoint temperature and a setpoint humidity.

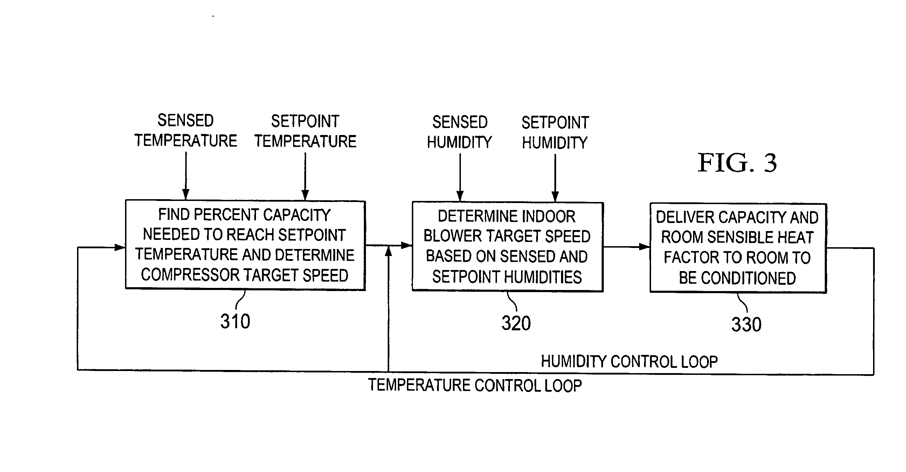

FIG. 3 is a block diagram of one embodiment of a control system for controlling both temperature and humidity in an air conditioning system having a variable-speed compressor and a variable-speed indoor blower. The control system embodiment of FIG. 3 is embodied in two control loops: a temperature control loop and a humidity control loop contained in the temperature control loop. In a functional block 310 of the temperature control loop, the control system finds the capacity (which may be expressed as a percentage) needed to reach a setpoint temperature given sensed and setpoint temperatures for the conditioned room. From the needed capacity, the control system determines a target speed for the variable-speed compressor. The control system then causes control signals to be transmitted to the variable-speed compressor to cause the variable-speed compressor to begin to assume the target speed. In a functional block 320 of both the temperature control loop and the humidity control loop, the control system determines a target speed for the variable-speed indoor blower based on the sensed and setpoint humidities for the conditioned room. The control system then causes control signals to be transmitted to the variable-speed indoor blower to cause the variable-speed indoor blower to begin to assume the target speed. If the sensed humidity is less than or equals the setpoint humidity (*i.e.,* no dehumidification demand exists), the control system determines a target speed for the variable-speed indoor blower that yields the maximum overall efficiency.

Having been configured to deliver a particular capacity to the conditioned room, the capacity is then delivered to the conditioned room in a functional block 330, ostensibly causing the temperature of the conditioned room to change as a result. This new temperature, in turn, is sensed when the temperature control loop repeats, and new capacities, target compressor speeds and target indoor blower speeds are found and determined as described above. The temperature and humidity control loops may be repeated as often as a particular application finds advantageous, either periodically, aperiodically or upon the occurrence of an external event (e.g., a change in sensed temperature or humidity, e.g., that exceeds a threshold).

In one embodiment, the air conditioning system is configured to operate in a high-efficiency mode. In the high efficiency mode, it is assumed that no dehumidification demand exists. Accordingly, the target speed of the variable-speed indoor blower is set at a maximum efficiency for the air conditioning system, and the air conditioning system operates along the line 250 of FIG. 2.

FIG. 4 is a flow diagram of one embodiment of a control method for controlling both temperature and humidity in an air conditioning system having a variable-speed compressor and a variable-speed indoor blower. The method begins in a start step 410. In a step 420, a target speed of the compressor is determined based on sensed and setpoint temperatures. In a step 430, a target speed of the indoor blower is determined based on sensed and setpoint humidities. In a step 440, the target speed of the compressor is employed to control the compressor of the air conditioning system. In a step 450, the target speed of the indoor blower to control the indoor blower of the air conditioning system. In a step 460, the air conditioning system is caused to operate in a high-efficiency mode in which the target speed of the indoor blower is set at a maximum efficiency for the air conditioning system. The method ends in an end step 470.

Those skilled in the art to which this application relates will appreciate that other and further additions, deletions, substitutions and modifications may be made to the described embodiments.

## Claims

1. A control system (140) for controlling both temperature and humidity in an air conditioning system (100) having a variable-speed compressor (111) and a variable-speed indoor blower (121), comprising:
a temperature control loop (310) in which a target speed of said compressor is determined based on sensed and setpoint temperatures; and **characterized in that** the control system further comprises:
a humidity control loop (320, 330), located in said temperature control loop, in a target speed of said indoor blower is determined based on sensed and setpoint humidities, said target speed of said compressor employable to control said compressor and said target speed of said indoor blower employable to control said indoor blower of said air conditioning system.

2. The control system (140) as recited in Claim 1 wherein said target speed of said compressor is based on a fraction of a capacity of said air conditioning system required to achieve said setpoint temperature.

3. The control system (140) as recited in Claim 1 wherein said fraction is expressed as a percentage of a maximum operating speed.

4. The control system (140) as recited in Claim 1 wherein said target speed of said indoor blower is expressed in cubic feet per minute.

5. The control system (140) as recited in Claim 1 wherein said humidity is a relative humidity.

6. The control system (140) as recited in Claim 1 wherein said target speed of said indoor blower is set at a maximum efficiency for said air conditioning system when a humidity of a room conditioned by said air conditioning system is less than or equals said setpoint humidity.

7. The control system (140) as recited in Claim 1 wherein said system (140) is configured to operate in a high-efficiency mode in which the sensed humidity is less than or equal to the setpoint humidity, no target humidity exists and said target speed of said indoor blower is set at a maximum efficiency for said air conditioning system.

8. An HVAC system (100), comprising:
a variable-speed compressor (111);
a condenser coil (112) coupled to said variable-speed compressor;
a variable-speed indoor blower (121);
an evaporator coil (122) coupled to said condenser coil and said variable-speed indoor blower; and
a control system (140) as recited in claim 1.

9. The HVAC system (100) as recited in Claim 8 wherein said target speed of said compressor is based on a fraction of a capacity of said HVAC system required to achieve said setpoint temperature.

10. The HVAC system (100) as recited in Claim 8 wherein said fraction is expressed as a percentage of a maximum operating speed.

## Patentansprüche

1. Ein Steuersystem (140) zur Temperatur- und Feuchtigkeitssteuerung in einem Klimaanlagensystem (100) mit einem drehzahlgeregelten Verdichter (111) und einem drehzahlgeregelten Innenraumgebläse (121), wobei das Steuersystem Folgendes umfasst:
einen Temperaturregelkreis (310), bei welchem eine Zielgeschwindigkeit des besagten Verdichters auf Basis von gemessenen und Sollwerttemperaturen bestimmt wird; sowie **dadurch gekennzeichnet, dass** das Steuersystem ferner Folgendes umfasst:
einen im besagten Temperaturregelkreis befindlichen Feuchtigkeitsregelkreis (320, 330), bei welchem eine Zielgeschwindigkeit des besagten Innenraumgebläses auf Basis von gemessenen und Sollwertfeuchten bestimmt wird, wobei die besagte Zielgeschwindigkeit des besagten Verdichters zum Steuern des besagten Verdichters und die besagte Zielgeschwindigkeit des besagten Innenraumgebläses zum Steuern des besagten Innenraumgebläses des besagten Klimaanlagensystems eingesetzt werden kann.

2. Das Anspruch 1 entsprechende Steuersystem (140), wobei die besagte Zielgeschwindigkeit des besagten Verdichters auf einem Bruchteil einer Kapazität des besagten Klimaanlagensystems basiert, die erforderlich ist, um die besagte Sollwerttemperatur zu erreichen.

3. Das Anspruch 1 entsprechende Steuersystem (140), wobei der besagte Bruchteil als Prozentsatz der maximalen Betriebsdrehzahl ausgedrückt wird. 12166400

4. Das Anspruch 1 entsprechende Steuersystem (140), wobei die besagte Zielgeschwindigkeit des besagten Innenraumgebläses in Kubikfuß pro Minute ausgedrückt wird.

5. Das Anspruch 1 entsprechende Steuersystem (140), wobei die besagte Feuchtigkeit eine relative Feuchte ist.

6. Das Anspruch 1 entsprechende Steuersystem (140), wobei die besagte Zielgeschwindigkeit des besagten Innenraumgebläses auf eine maximale Effizienz des besagten Klimaanlagensystems eingestellt wird, wenn eine Feuchtigkeit eines Raums, der durch besagtes Klimaanlagensystem konditioniert wird, unter der besagten Sollwertfeuchtigkeit liegt oder dieser entspricht.

7. Das Anspruch 1 entsprechende Steuersystem (140), wobei das besagte System (140) zum Betrieb in einem Hocheffizienzmodus konfiguriert ist, bei welchem die gemessene Feuchtigkeit unter der Sollwertfeuchtigkeit liegt oder dieser entspricht, wobei keine Zielfeuchtigkeit vorhanden ist und die besagte Zielgeschwindigkeit des besagten Innenraumgebläses auf eine maximale Effizienz des besagten Klimaanlagensystems eingestellt wird.

8. Ein HVAC-System (100), das Folgendes umfasst:
einen drehzahlgeregelten Verdichter (111);
eine Kondensatorschlange (112), die an besagten drehzahlgeregelten Verdichter gekoppelt ist;
ein drehzahlgeregeltes Innenraumgebläse (121); 12166400
eine Verdampferschlange (122), die an besagte Kondensatorschlange und besagtes drehzahlgeregeltes Innenraumgebläse gekoppelt ist; und
ein Anspruch 1 entsprechendes Steuersystem (140).

9. Das Anspruch 8 entsprechende HVAC-System (100), wobei die besagte Zielgeschwindigkeit des besagten Verdichters auf einem Bruchteil einer Kapazität des besagten HVAC-Systems basiert, die erforderlich ist, um die besagte Sollwerttemperatur zu erreichen.

10. Das Anspruch 8 entsprechende HVAC-System (100), wobei der besagte Bruchteil als Prozentsatz der maximalen Betriebsdrehzahl ausgedrückt wird.

## Revendications

1. Un système de régulation (140) pour réguler à la fois la température et l'humidité dans un système de climatisation (100) possédant un compresseur à vitesse variable (111) et un ventilateur intérieur à vitesse variable (121), comprenant :
une boucle de régulation de température (310) dans laquelle une vitesse cible dudit compresseur est déterminée sur la base de températures détectées et de consigne ; et **caractérisé en ce que** le système de régulation comprend en outre :
une boucle de régulation d'humidité (320, 330), située dans ladite boucle de régulation de température, dans laquelle une vitesse cible dudit ventilateur intérieur est déterminée sur la base des humidités détectées et de consigne, ladite vitesse cible dudit compresseur étant utilisée pour réguler ledit compresseur et ladite vitesse cible dudit ventilateur intérieur étant utilisée pour réguler ledit ventilateur intérieur dudit système de climatisation.

2. Le système de régulation (140) selon la revendication 1 dans lequel ladite vitesse cible dudit compresseur est basée sur une fraction d'une capacité dudit système de climatisation nécessaire pour atteindre ladite température de consigne.

3. Le système de régulation (140) selon la revendication 1 dans lequel ladite fraction est exprimée en un pourcentage d'une vitesse maximum de fonctionnement.

4. Le système de régulation (140) selon la revendication 1 dans lequel ladite vitesse cible dudit ventilateur intérieur est exprimée en pieds cubes par minute.

5. Le système de régulation (140) selon la revendication 1 dans lequel ladite humidité est une humidité relative.

6. Le système de régulation (140) selon la revendication 1 dans lequel ladite vitesse cible dudit ventilateur intérieur est réglée à une efficacité maximale pour ledit système de climatisation quand une humidité d'une pièce climatisée par ledit système de climatisation est inférieure ou égale à ladite humidité de consigne.

7. Le système de régulation (140) selon la revendication 1 dans lequel ledit système (140) est configuré pour fonctionner dans un mode d'efficacité élevée dans lequel l'humidité détectée est inférieure ou égale à l'humidité de consigne, aucune humidité cible n'existe et ladite vitesse cible dudit ventilateur intérieur est réglée à une efficacité maximale pour ledit système de climatisation.

8. Un système HVAC (100) comprenant :
un compresseur à vitesse variable (111) ;
un serpentin de condenseur (112) couplé audit compresseur à vitesse variable ;
un ventilateur intérieur à vitesse variable (121) ;
un serpentin d'évaporateur (122) couplé au dit serpentin de condenseur et au dit ventilateur intérieur à vitesse variable ; et
un système de régulation (140) selon la revendication 1.

9. Le système HVAC (100) selon la revendication 8 dans lequel ladite vitesse cible dudit compresseur est basée sur une fraction d'une capacité dudit système HVAC nécessaire pour atteindre ladite température de consigne.

10. Le système HVAC (100) selon la revendication 8 dans lequel ladite fraction est exprimée en un pourcentage d'une vitesse maximum de fonctionnement.
